# FASCICULE DE BREVET EUROPEEN

(11) **EP 2 198 136 B1**
(45) Date de publication et mention de la délivrance du brevet: **30.11.2011**
(21) Numéro de dépôt: 08841862.9
(22) Date de dépôt: 06.10.2008
(51) Int. Cl.: F01N 11/00

(54) **PROCEDE DE DIAGNOSTIC DE L'ETAT D'UN CONVERTISSEUR CATALYTIQUE D'UN SYSTEME D'ECHAPPEMENT D'UN MOTEUR D'UN VEHICULE AUTOMOBILE**
VERFAHREN ZUR DIAGNOSTIZIERUNG DES STATUS EINES KATALYTISCHEN UMRICHTERS DES ABGASSYSTEMS EINES KRAFTFAHRZEUGMOTORS
METHOD OF DIAGNOSING THE STATE OF A CATALYTIC CONVERTER OF AN EXHAUST SYSTEM OF A MOTOR VEHICLE ENGINE

(30) Priorité: 08.10.2007 FR 0707027
(43) Date de publication de la demande: 23.06.2010
(73) Titulaire: Renault S.A.S., 92100 Boulogne-Billancourt (FR)
(72) Inventeur: THOUVENEL, NICOLAS, F-91610 Allancourt sur Essonne (FR); GUY-BOUYSSOU, Delphine, F-91670Angerville (FR)
(74) Mandataire: Rougemont, Bernard
(86) Numéro de dépôt international: PCT/FR2008/051806
(87) Numéro de publication internationale: WO 2009/053600

(56) Documents cités:
- EP-A- 0 756 072
- DE-A1- 19 758 154
- DE-A1- 19 811 574
- US-A- 5 179 833
- US-A- 5 182 907
- US-A- 5 927 068

## Description

La présente invention concerne un procédé de diagnostic de l'état d'un convertisseur catalytique d'un système d'échappement d'un moteur d'un véhicule automobile. Elle concerne aussi un dispositif de diagnostic permettant de mettre en oeuvre un tel procédé de diagnostic.

Les moteurs à combustion interne émettent des polluants. Pour limiter ces émissions, il est connu de prévoir un système d'échappement muni de convertisseurs catalytiques permettant de transformer les polluants en gaz moins nocifs.

Cependant, ces convertisseurs ont une durée de vie limitée et leur vieillissement progressif entraîne une augmentation progressive des émissions polluantes, notamment des émissions d'hydrocarbures imbrûlés (HC) et/ou de monoxyde de carbone (CO).

Des seuils d'émissions sont fixés par des réglementations. De plus, une règlementation OBD (pour On-Board Diagnostics) impose de prévoir des moyens embarqués sur les véhicules à moteur à combustion interne afin de permettre la détection de tout dépassement de ces seuils d'émissions, notamment dus à un dysfonctionnement d'un convertisseur catalytique. Notamment, la réglementation impose, de par la définition de seuils d'émission de polluants, des diagnostics fonctionnels de composants majeurs du système de dépollution et notamment du catalyseur d'oxydation.

Depuis quelques étapes, les évolutions de cette réglementation conduisent à penser qu'à moyen terme (horizon Euro6), les niveaux de HC/CO spécifiés seront tellement faibles que des diagnostics des convertisseurs catalytiques seront difficiles à mettre en oeuvre d'une manière robuste compte tenu de l'état de la technique actuelle.

Aujourd'hui, la mesure de caractéristiques physiques du convertisseur catalytique peut être réalisée grâce à des technologies de surveillance suffisamment précises pour diagnostiquer les états du catalyseur comme imposés jusqu'à maintenant par la réglementation OBD.

Néanmoins, à l'horizon d'une étape OBD Diesel Euro6, la réglementation se caractérisera potentiellement par des seuils de concentration d'hydrocarbures très faibles. Il est alors très probable que les limites des diagnostics basés sur la détermination de caractéristiques physiques des convertisseurs catalytiques (par mesures de températures) soient atteintes.

L'objectif est donc de pouvoir diagnostiquer de manière plus fine une défaillance d'un convertisseur catalytique en termes de perte d'efficacité de conversion.

On connaît du brevet US 5,182,907 un procédé pour diagnostiquer une défaillance d'un catalyseur trois voies dans laquelle on utilise notamment un capteur amont pour déterminer la concentration en hydrocarbures en amont du catalyseur, un capteur aval pour déterminer la concentration en hydrocarbures en aval du catalyseur et une sonde de température pour déterminer la température du catalyseur. Une telle solution nécessite de nombreux moyens capteurs et risque de ne plus être utilisable si la réglementation devient plus sévère.

On connaît aussi du document DE 197 58 154 un procédé pour diagnostiquer une défaillance d'un convertisseur catalytique trois voies dans laquelle on utilise notamment un capteur en amont et un capteur en aval du convertisseur catalytique pour déterminer son rendement. On utilise encore dans ce procédé complexe d'autres paramètres pour déterminer l'énergie fournie au convertisseur entre un instant de démarrage à froid et le moment où le rendement du convertisseur devient supérieur à 50%. Un tel procédé est complexe, il exige de réaliser des boudes de calculs d'estimation utilisant de nombreux paramètres. De plus, il risque de ne plus être utilisable si la réglementation devient plus sévère. En outre, le procédé ne peut être mis en oeuvre que dans des situations particulières : elle exige de débuter par un démarrage à froid. Ainsi, sa fréquence de mise en oeuvre peut être incompatible avec les nouvelles normes.

On connaît du document US 5,927,068 un procédé de diagnostic dans lequel on effectue des mesures de concentrations d'hydrocarbures en aval du catalyseur.

On connaît du document EP 0756072 un procédé de diagnostic de l'état d'un catalyseur mettant en oeuvre des calculs de rendement du catalyseur.

On connaît du document DE 198 11 574 un procédé de diagnostic d'un catalyseur dans lequel on utilise deux capteurs de polluants en amont et aval du catalyseur.

Le but de l'invention est de fournir un procédé de diagnostic de l'état d'un convertisseur catalytique obviant aux inconvénients identifiés précédemment et améliorant les procédés de diagnostic connus de l'art antérieur. En particulier, l'invention propose un procédé simple à mettre en oeuvre, exigeant peu de moyens et permettant de déterminer de manière fiable et robuste l'état d'un convertisseur catalytique. Elle permet encore d'alléger considérablement le coût de la définition technique, de minimiser la taille de la stratégie de surveillance du convertisseur et de déterminer un état défaillant d'un convertisseur relativement à un seuil réglementaire très faible, ce que ne permettent pas de faire les procédés connus de l'art antérieur. Enfin, elle permet de se passer de capteurs de température dédiés.

Selon l'invention, le procédé de diagnostic de l'état d'un convertisseur catalytique d'un système d'échappement d'un moteur d'un véhicule automobile est caractérisé en ce qu'il comprend une étape pour estimer si la température du convertisseur catalytique est comprise dans un intervalle de température dans lequel un convertisseur en bon état est amorcé et dans lequel un convertisseur en mauvais état n'est pas amorcé et, lorsque tel est le cas, une étape de mesure d'une concentration d'un polluant en aval du convertisseur catalytique pour déterminer l'état du convertisseur et une étape d'analyse de la valeur de concentration du polluant pour déduire que le convertisseur catalytique est en mauvais état si la valeur de concentration est supérieure à un seuil et déduire que le convertisseur catalytique est en bon état si la valeur de concentration est inférieure au seuil.

De préférence, on utilise exclusivement une ou plusieurs mesures de concentration de polluant en aval du convertisseur catalytique pour déterminer l'état du convertisseur.

L'étape pour estimer si la température du convertisseur catalytique est comprise dans un intervalle de température peut comprendre une mesure de température des gaz d'échappement.

L'étape pour estimer si la température du convertisseur catalytique est comprise dans un intervalle de température peut comprendre une mesure de température du liquide de refroidissement du moteur et au moins une mesure d'un autre paramètre d'état du moteur.

L'étape de mesure d'une concentration de polluant peut être une étape de mesure d'une concentration d'hydrocarbures.

Selon l'invention, un dispositif de diagnostic de l'état d'un convertisseur catalytique est caractérisé en ce qu'il comprend des moyens matériels et logiciels de mise en oeuvre du procédé défini précédemment.

Le dispositif de diagnostic peut comprendre un capteur de mesure de la concentration d'un polluant en aval du convertisseur catalytique.

Le dispositif de diagnostic peut comprendre un capteur de mesure de température également utilisé pour assurer une autre fonction que la fonction de détermination de conditions de mesure dans lesquelles doit être réalisée l'étape de mesure de la concentration du polluant en aval du convertisseur catalytique.

Selon l'invention, un véhicule automobile comprend un dispositif de diagnostic défini précédemment.

Le dessin annexé représente, à titre d'exemple, un mode d'exécution d'un procédé de diagnostic selon l'invention et un mode de réalisation d'un dispositif de diagnostic pour mettre en oeuvre un tel procédé.
La figure 1 est un schéma explicatif du principe sur lequel se base le procédé de diagnostic selon l'invention.
La figure 2 est un schéma d'un moteur à combustion interne de véhicule muni d'un mode de réalisation d'un dispositif de diagnostic selon l'invention.
La figure 3 est un logigramme d'un procédé de détermination de l'état d'un convertisseur, incluant un mode d'exécution d'un procédé de diagnostic selon l'invention.

Le procédé de diagnostic selon l'invention s'applique en particulier à un convertisseur de type catalyseur d'oxydation assurant l'oxydation des hydrocarbures imbrûlés et du monoxyde de carbone dans un système de post-traitement d'un moteur à allumage par compression.

Le principe du procédé selon l'invention repose sur le lien étroit qui existe entre le vieillissement du convertisseur et son efficacité dans des conditions particulières de fonctionnement. En effet, la température d'amorçage du convertisseur et l'efficacité de conversion des hydrocarbures sont deux phénomènes intimement liés. De plus, le vieillissement du catalyseur d'oxydation influe directement sur la température d'amorçage en la décalant vers les hautes températures et donc sur le traitement des polluants rejetés par le moteur, notamment les hydrocarbures et le monoxyde de carbone.

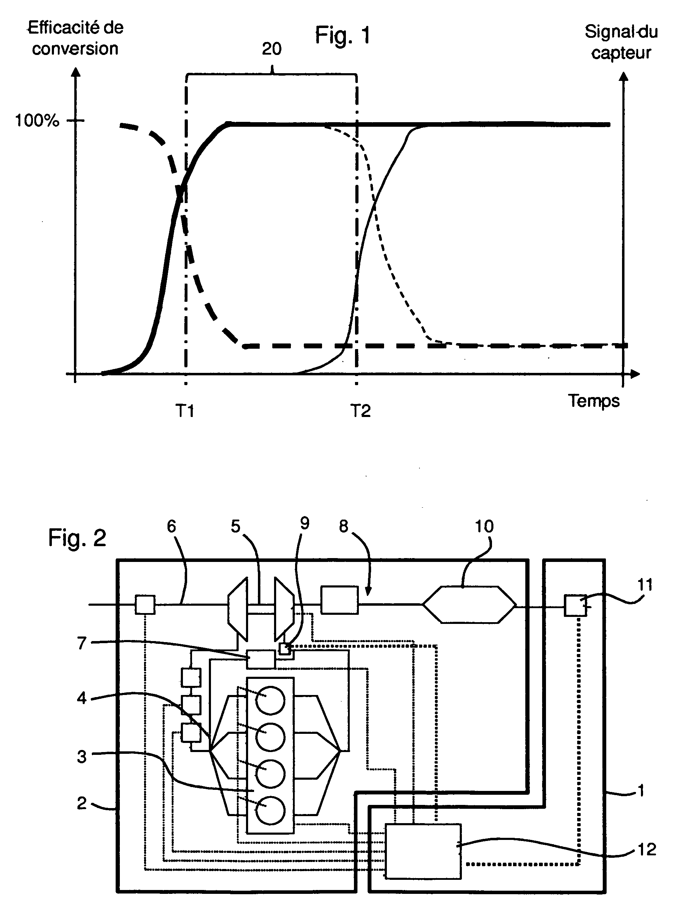

Ces phénomènes sont représentés à la figure 1. Cette figure représente, en fonction de la température, en traits continus, l'efficacité de conversion de deux convertisseurs. L'efficacité de conversion d'un convertisseur en bon état est représenté en trait gras et l'efficacité de conversion d'un convertisseur usé est représenté en trait fin. Comme on le lit aisément sur la figure, une même efficacité des deux convertisseurs est obtenue avec des valeurs de températures significativement différentes, cette température étant nettement plus élevée pour un convertisseur usé que pour un convertisseur en bon état.

En corollaire de ce phénomène, on représente, sur la même figure, les niveaux des signaux reçus d'un capteur de mesure de concentration d'hydrocarbures en aval des deux convertisseurs mentionnés ci-dessus. En traits pointillés gras, est représenté le niveau du signal en aval d'un convertisseur en bon état et, en traits pointillés fins, est représenté le niveau du signal en aval d'un convertisseur usé.

Il apparaît en conséquence un intervalle 20 de températures (délimitée par deux segments verticaux en traits mixtes) dans lequel un convertisseur en bon état est opérationnel et dans lequel un convertisseur usé n'est pas opérationnel. Ainsi, il suffit d'effectuer une mesure de concentration des hydrocarbures en aval du convertisseur à une température dans une telle zone pour connaître l'état du convertisseur. Si la concentration est élevée, le convertisseur est usé, si la concentration est faible, le convertisseur est en bon état.

Un dispositif de diagnostic 1 permettant de mettre en oeuvre un procédé de mesure selon l'invention est représenté à la figure 2 en situation sur un moteur 2 à combustion interne d'un véhicule automobile.

Le moteur 2 comprend principalement un bloc cylindre 3 alimenté grâce à des conduites d'admission 4 et 6 et un compresseur d'un turbocompresseur 5. Les gaz d'échappement sont évacués via une ligne d'échappement 8 après être passés dans une turbine du turbocompresseur. La ligne d'échappement comprend un convertisseur catalytique 10 comprenant notamment un convertisseur d'oxydation. Il comprend en outre différents capteurs raccordés à un calculateur électronique 12 permettant de piloter son fonctionnement.

Le dispositif de diagnostic 1 comprend un capteur 11 de concentration de polluant disposé sur la ligne d'échappement en aval du convertisseur catalytique 10. Ce capteur est relié au calculateur électronique 12. Cette liaison permet au calculateur de recueillir les valeurs de concentration de polluant mesurées par le capteur. Le capteur est de préférence un capteur de concentration d'hydrocarbures. Le dispositif de diagnostic 1 comprend aussi un ou plusieurs autres capteurs permettant de déterminer à quel moment doit être effectuée la mesure de concentration en hydrocarbures par le capteur 11 et permettre ainsi de diagnostiquer l'état du convertisseur catalytique. Cet ou ces autres capteurs sont également reliés au calculateur 12. Cependant, ils sont de préférence utilisés pour assurer d'autres fonctions que la surveillance de l'état du convertisseur et ne sont donc pas dédiés à cette fonction de surveillance. Ainsi, le procédé de diagnostic selon l'invention ne nécessite qu'un capteur en aval du convertisseur et un calculateur électronique 12 ayant accès à des paramètres moteur utilisés pour d'autre fonctions. Le calculateur comprend au moins un module logiciel permettant de régir le fonctionnement du dispositif de diagnostic selon le procédé de diagnostic objet de l'invention. Le dispositif de diagnostic comprend également des moyens (non représentés) pour signifier que le convertisseur est en mauvais état ou qu'il est usé. Ces moyens peuvent par exemple comprendre un témoin sur le tableau de bord du véhicule.

Le positionnement d'un capteur de concentration d'hydrocarbures en aval du convertisseur catalytique permet de détecter et de mesurer une faible défaillance du convertisseur. Si l'émission de polluants dépasse un seuil fixé par la réglementation, aussi faible soit-il, ce sera dû à une défaillance du convertisseur et il sera possible de détecter cette défaillance.

Le convertisseur catalytique peut notamment être un catalyseur d'oxydation diesel tout type de matériau ou un filtre à particules catalytique.

Dans une première variante de dispositif de diagnostic, celui-ci utilise des informations d'un capteur 9 de température d'échappement du type capteur de température avant turbine permettant de disposer d'une information thermique proche du convertisseur à diagnostiquer.

Dans une deuxième variante de dispositif de diagnostic, celui-ci utilise des informations d'un capteur de température d'un système de filtre à particules permettant de disposer d'une information thermique proche du convertisseur à diagnostiquer.

Dans une troisième variante de dispositif de diagnostic, celui-ci utilise des informations d'un capteur de température de liquide de refroidissement cumulé à des informations moteur classiques comme, par exemple le régime et/ou la charge, afin de déterminer approximativement la température du convertisseur à diagnostiquer.

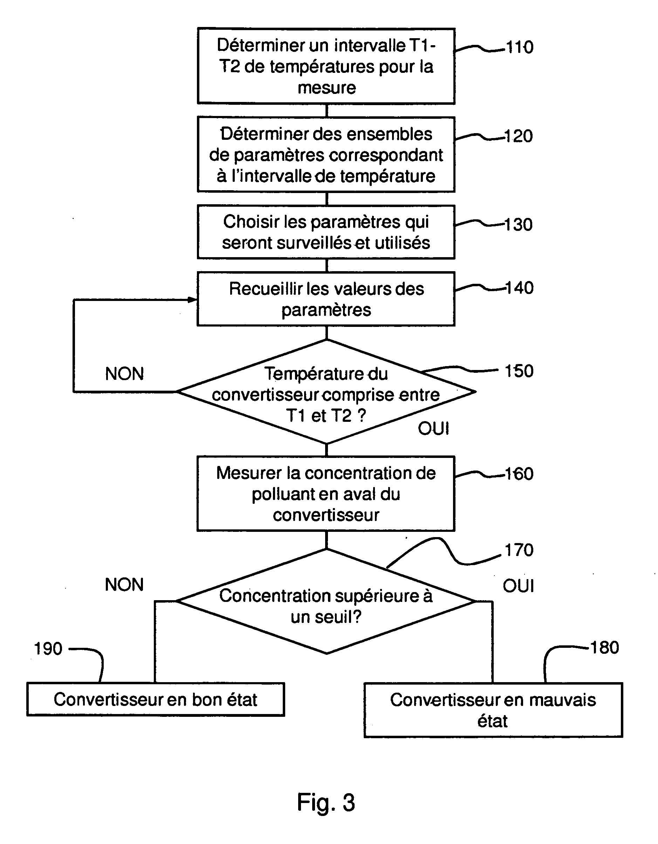

Dans un procédé de détermination de l'état d'un convertisseur, on décrit ci-après en référence à la figure 3, un exemple de mode d'exécution du procédé de diagnostic selon l'invention.

Le procédé de détermination de l'état d'un convertisseur comprend un procédé de définition de paramètres et de valeurs de paramètres et un procédé de diagnostic.

Le procédé de définition de paramètres et de valeurs de paramètres comprend par exemple la série des étapes 110 à 130 décrites ci-après et sert à repérer les phases de fonctionnement moteur permettant de s'assurer d'une prise de décision fiable sur l'état du convertisseur.

Dans la première étape 110, on détermine les bornes T1, T2 d'un intervalle 20 de températures dans lequel un convertisseur jugé en bon état présente une efficacité de conversion importante, par exemple supérieure à 80% et dans lequel un convertisseur jugé en mauvais état présente une efficacité de conversion faible, par exemple inférieure à 20%. Cette détermination est par exemple effectuée par des moyens statistiques après des mesures réalisées sur une population de convertisseurs en bon état et une population de convertisseurs en mauvais état.

Dans la deuxième étape 120, on détermine des ensembles de paramètres de fonctionnement du moteur, notamment des paramètres thermiques au niveau du liquide de refroidissement et/ou des paramètres thermiques sur la ligne d'échappement et/ou des paramètres de régime moteur et/ou des paramètres de charge du moteur et/ou des paramètres temporels, correspondant à l'intervalle de températures défini à l'étape 110. En d'autres termes, on détermine des moyens pour détecter les périodes pendant lesquelles la température du convertisseur sera comprise dans l'intervalle de température défini à l'étape 110. Cette étape peut être réalisée par exemple par des séries de processus expérimentaux ou par simulation.

Dans la troisième étape 130, on choisit les paramètres qui seront surveillés et utilisés pour identifier les périodes dans lesquelles la température du convertisseur est comprise entre les bornes T1 et T2.

Une fois le procédé de définition de paramètres et de valeurs de paramètres exécuté, on met en oeuvre le procédé de diagnostic qui sert à analyser et déterminer l'état du convertisseur.

Un mode d'exécution de ce procédé de diagnostic comprend les étapes suivantes décrites ci-après.

Dans une première étape 140, le calculateur électronique recueille des valeurs de paramètres de fonctionnement du véhicule et en particulier des paramètres de fonctionnement choisis à l'étape 130.

Dans une deuxième étape 150, le calculateur électronique estime grâce à un algorithme et aux valeurs recueillies précédemment, si la température du convertisseur est comprise entre les bornes T1 et T2. Ainsi, on s'assure que l'on se situe dans la zone de températures dans laquelle un convertisseur en bon état est amorcé et dans laquelle un convertisseur en mauvais état n'est pas amorcé (et donc ne traite pas encore les hydrocarbures).

Si tel n'est pas le cas le procédé boucle sur l'étape 140.

Par contre, si tel est le cas, on passe à une étape 160 dans laquelle le calculateur recueille ou tient compte de la valeur de concentration de polluant fournie par le capteur 11 en aval du convertisseur.

Dans une étape 170, la valeur de concentration de polluant est analysée, par exemple, par comparaison à un seuil.

Si cette valeur est supérieure au seuil, on en déduit dans une étape 180 que le convertisseur catalytique est en mauvais état. Des moyens peuvent alors être mis en oeuvre pour signaler ce mauvais état.

Si cette valeur est inférieure au seuil, on en déduit dans une étape 190 que le convertisseur catalytique est en bon état.

Ainsi, grâce au procédé de diagnostic selon l'invention, on peut distinguer un convertisseur en bon état qui est amorcé et qui traite les hydrocarbures rejetés par le moteur (par une absence de détection d'hydrocarbures en aval du convertisseur), d'un convertisseur en mauvais état qui n'est pas amorcé et qui ne traite pas les hydrocarbures rejetés par le moteur (par une détection d'hydrocarbures en aval du convertisseur), cette distinction étant faite exclusivement dans l'intervalle de température évoqué précédemment.

Le procédé de diagnostic peut être mis en oeuvre à l'arrêt, moteur tournant, dans une opération de maintenance, un outil de diagnostic après-vente étant prévu pour exploiter les signaux émis par le capteur d'hydrocarbures 11.

Le procédé selon l'invention présente différents avantages. Il rend possible de détecter des états du convertisseur qui ne sont pas détectables grâce aux moyens connus de l'art antérieur. De plus cette détection peut être faite de manière précise, fiable et robuste.

En outre, le procédé de diagnostic selon l'invention permet de s'affranchir de capteurs habituellement dédiés à la surveillance du convertisseur catalytique. Notamment, on peut s'affranchir de tout capteur de température ou toute sonde de richesse dédié à la seule surveillance du convertisseur dans l'état de la technique.

D'autre part, grâce à l'invention, il est possible de réaliser un dispositif de diagnostic et un procédé de diagnostic non intrusifs, c'est-à-dire tels qu'il n'impose pas l'intervention du contrôle moteur sur l'injection. Ainsi, le procédé de diagnostic selon l'invention peut être exécuté en continu sur toutes les phases de fonctionnement du moteur avec un résultat garanti et robuste.

Il est évidemment possible d'appliquer la méthode selon l'invention à tout type de moteur à combustion et ceci indépendamment de son architecture.

Enfin, il est envisageable d'appliquer cette technologie à tout type de matériau de convertisseur catalytique y compris à tout type de configuration de filtre à particules catalytique ou autre catalyseur 4 voies et à tout type de configuration du système de post-traitement.

## Revendications

1. Procédé de diagnostic de l'état d'un convertisseur catalytique (10) d'un système d'échappement d'un moteur (2) d'un véhicule automobile, **caractérisé en ce qu'**il comprend une étape pour estimer si la température du convertisseur catalytique est comprise dans un intervalle de température (T1, T2) dans lequel un convertisseur en bon état est amorcé et dans lequel un convertisseur en mauvais état n'est pas amorcé et, lorsque tel est le cas, une étape de mesure d'une concentration d'un polluant en aval du convertisseur catalytique pour déterminer l'état du convertisseur et une étape d'analyse de la valeur de concentration du polluant pour déduire que le convertisseur catalytique est en mauvais état si la valeur de concentration est supérieure à un seuil et déduire que le convertisseur catalytique est en bon état si la valeur de concentration est inférieure au seuil.

2. Procédé de diagnostic selon la revendication 1, **caractérisé en ce qu'**on utilise exclusivement une ou plusieurs mesures de concentration de polluant en aval du convertisseur catalytique pour déterminer l'état du convertisseur.

3. Procédé de diagnostic selon l'une des revendications 1 ou 2, **caractérisé en ce que** l'étape pour estimer si la température du convertisseur catalytique est comprise dans un intervalle de température (T1, T2) comprend une mesure de température des gaz d'échappement.

4. Procédé de diagnostic selon l'une des revendications 1 ou 2, **caractérisé en ce que** l'étape pour estimer si la température du convertisseur catalytique est comprise dans un intervalle de température (T1, T2) comprend une mesure de température du liquide de refroidissement du moteur et au moins une mesure d'un autre paramètre d'état du moteur.

5. Procédé de diagnostic selon l'une des revendications précédentes, **caractérisé en ce que** l'étape de mesure d'une concentration de polluant est une étape de mesure d'une concentration d'hydrocarbures.

6. Dispositif de diagnostic (1) de l'état d'un convertisseur catalytique (10), **caractérisé en ce qu'**il comprend des moyens matériels (11, 12) et logiciels pour mettre en oeuvre le procédé selon l'une des revendications précédentes.

7. Dispositif de diagnostic selon la revendication précédente, **caractérisé en ce qu'**il comprend un capteur (11) de mesure de la concentration d'un polluant en aval du convertisseur catalytique (10).

8. Dispositif de diagnostic selon la revendication 6 ou 7, **caractérisé en ce qu'**il comprend un capteur de mesure de température également utilisé pour assurer une autre fonction que la fonction de détermination de conditions de mesure dans lesquelles doit être réalisée l'étape de mesure de la concentration du polluant en aval du convertisseur catalytique.

9. Véhicule automobile comprenant un dispositif de diagnostic selon l'une des revendications 6 à 8.

## Claims

1. Method for diagnosing the condition of a catalytic converter (10) of an exhaust system of an engine (2) of a motor vehicle, **characterized in that** it comprises a step for estimating whether the temperature of the catalytic converter is within a temperature range (T1, T2) in which a converter in good condition is primed and in which a converter in poor condition is not primed and, when such is the case, a step for measuring a concentration of a pollutant downstream of the catalytic converter to determine the condition of the converter and a step for analysing the pollutant concentration value to deduce that the catalytic converter is in poor condition if the concentration value is above a threshold and deduce that the catalytic converter is in good condition if the concentration value is below the threshold.

2. Diagnostic method according to Claim 1, **characterized in that** one or more pollutant concentration measurements downstream of the catalytic converter is/are used exclusively to determine the condition of the converter.

3. Diagnostic method according to either of Claims 1 and 2, **characterized in that** the step for estimating whether the temperature of the catalytic converter is within a temperature range (T1, T2) comprises an exhaust gas temperature measurement.

4. Diagnostic method according to either of Claims 1 and 2, **characterized in that** the step for estimating whether the temperature of the catalytic converter is within a temperature range (T1, T2) comprises an engine coolant temperature measurement and at least one measurement of another engine state parameter.

5. Diagnostic method according to one of the preceding claims, **characterized in that** the step for measuring a pollutant concentration is a step for measuring a concentration of hydrocarbons.

6. Device (1) for diagnosing the condition of a catalytic converter (10), **characterized in that** it comprises hardware means (11, 12) and software means for implementing the method according to one of the preceding claims.

7. Diagnostic device according to the preceding claim, **characterized in that** it comprises a sensor (11) for measuring the concentration of a pollutant downstream of the catalytic converter (10).

8. Diagnostic device according to Claim 6 or 7, **characterized in that** it comprises a temperature measurement sensor also used for a function other than the function for determining measurement conditions in which the step for measuring the concentration of the pollutant downstream of the catalytic converter must be performed.

9. Motor vehicle including a diagnostic device according to one of Claims 6 to 8.

## Patentansprüche

1. Verfahren zur Diagnose des Zustands eines katalytischen Konverters (10) eines Auspuffsystems eines Motors (2) eines Kraftfahrzeugs, **dadurch gekennzeichnet, dass** es einen Schritt des Schätzens, ob die Temperatur des katalytischen Konverters in einem Temperaturbereich (T1, T2) liegt, in dem ein Konverter in gutem Zustand aktiviert wird und in dem ein Konverter in schlechtem Zustand nicht aktiviert wird, und, wenn dies der Fall ist, einen Schritt des Messens einer Konzentration eines Schadstoffs hinter dem katalytischen Konverter, um den Zustand des Konverters zu bestimmen, und einen Schritt der Analyse des Konzentrationswerts des Schadstoffs enthält, um daraus abzuleiten, dass der katalytische Konverter in schlechtem Zustand ist, wenn der Konzentrationswert über einer Schwelle liegt, und abzuleiten, dass der katalytische Konverter in gutem Zustand ist, wenn der Konzentrationswert unter der Schwelle liegt.

2. Diagnoseverfahren nach Anspruch 1, **dadurch gekennzeichnet, dass** ausschließlich eine oder mehrere Schadstoff-Konzentrationsmessungen hinter dem katalytischen Konverter verwendet werden, um den Zustand des Konverters zu bestimmen.

3. Diagnoseverfahren nach einem der Ansprüche 1 oder 2, **dadurch gekennzeichnet, dass** der Schritt des Schätzens, ob die Temperatur des katalytischen Konverters in einem Temperaturbereich (T1, T2) liegt, eine Temperaturmessung der Abgase enthält.

4. Diagnoseverfahren nach einem der Ansprüche 1 oder 2, **dadurch gekennzeichnet, dass** der Schritt des Schätzens, ob die Temperatur des katalytischen Konverters in einem Temperaturbereich (T1, T2) liegt, eine Temperaturmessung der Kühlflüssigkeit des Motors und mindestens eine Messung eines anderen Zustandsparameters des Motors enthält.

5. Diagnoseverfahren nach einem der vorhergehenden Ansprüche, **dadurch gekennzeichnet, dass** der Schritt des Messens einer Schadstoffkonzentration ein Schritt des Messens einer Konzentration von Kohlenwasserstoffen ist.

6. Diagnosevorrichtung (1) des Zustands eines katalytischen Konverters (10), **dadurch gekennzeichnet, dass** sie Hardware- (11, 12) und Softwareeinrichtungen enthält, um das Verfahren nach einem der vorhergehenden Ansprüche durchzuführen.

7. Diagnosevorrichtung nach dem vorhergehenden Anspruch, **dadurch gekennzeichnet, dass** sie einen Sensor (11) zur Messung der Konzentration eines Schadstoffs hinter dem katalytischen Konverter (10) enthält.

8. Diagnosevorrichtung nach Anspruch 6 oder 7, **dadurch gekennzeichnet, dass** sie einen Sensor zur Temperaturmessung enthält, der ebenfalls verwendet wird, um eine andere Funktion als die Funktion der Bestimmung von Messbedingungen zu gewährleisten, unter denen der Schritt des Messens der Konzentration des Schadstoffs hinter dem katalytischen Konverter durchgeführt werden soll.

9. Kraftfahrzeug, das eine Diagnosevorrichtung nach einem der Ansprüche 6 bis 8 enthält.
